# EUROPÄISCHE PATENTSCHRIFT

(11) **EP 1 532 040 B1**
(45) Veröffentlichungstag und Bekanntmachung des Hinweises auf die Patenterteilung: **03.10.2007**
(21) Anmeldenummer: 03794855.1
(22) Anmeldetag: 08.08.2003
(51) Int. Cl.: B62D 65/00, B62D 25/20, B62D 21/12, B62D 25/08, B62D 25/06, B62D 25/04, B62D 25/02

(54) **KRAFTWAGEN-KAROSSERIE MIT EINER TRAGSTRUKTUR AUS GROSSFORMATIGEN TEILMODULEN**
MOTOR VEHICLE BODY COMPRISING A SUPPORT STRUCTURE COMPOSED OF LARGE-SIZE PARTIAL MODULES
CARROSSERIE DE VOITURE A STRUCTURE PORTANTE COMPOSEE DE MODULES DE GRANDES DIMENSIONS

(30) Priorität: 27.08.2002 DE 10239992
(43) Veröffentlichungstag der Anmeldung: 25.05.2005
(73) Patentinhaber: DaimlerChrysler AG, 70327 Stuttgart (DE)
(72) Erfinder: BOULAY, Olivier, Tokyo 158-0095 (JP); EIPPER, Konrad, 72108 Rottenburg (DE); FUSSNEGGER, Wolfgang, 72074 Tübingen (DE); KNOTHE, Jürgen, 89134 Blaustein (DE); KRÜGER, Jan, 70182 Stuttgart (DE); LANGNER, Jörg, 71101 Schönaich (DE); SCHEPER, Hubert, 71263 Weil der Stadt (DE); SPIES, Bernhard, 71063 Sindelfingen (DE)
(86) Internationale Anmeldenummer: PCT/EP2003/008818
(87) Internationale Veröffentlichungsnummer: WO 2004/024543

(56) Entgegenhaltungen:
- EP-A- 0 622 289
- EP-A- 1 093 995
- WO-A-96/13421
- FR-A- 2 618 746

## Beschreibung

Die Erfindung betrifft eine Karosserie für einen Kraftwagen der im Oberbegriff des Patentanspruchs 1 angegebenen Art.

Eine derartige Karosserie ist bereits aus der WO 96 13421 A als bekannt zu entnehmen, deren Tragstruktur aus zwei großformatigen Teilmodulen zusammengesetzt ist. Ein den hinteren Bereich der Tragstruktur bildendes Grundmodul umfasst dabei seitliche Längsträger sowie einen Karosserieboden, über welche das Grundmodul mit einem vorderen Teilmodul verbunden ist. Darüber hinaus ist das Grundmodul im Bereich von seitlichen oberen Dachsäulen mit einem Windschutzscheibenrahmen verbunden, der dem Vorbaumodul zugeordnet ist. Insgesamt ist das Vorbaumodul somit crashstabil am Grundmodul abgestützt, um eine vordere Knautschzone des Kraftwagens zu bilden. Ein vorderer Endbereich des Karosseriebodens gehört dabei zum Vorbaumodul und erstreckt sich zwischen seitlichen Längsträgerabschnitten des Grundmoduls über einen erheblichen Längenbereich nach hinten.

Als nachteilig bei der vorliegenden Karosserie ist der Umstand anzusehen, dass das Vorbaumodul erst durch die Befestigung des diesem zugeordneten Windschutzscheibenrahmens an der Dachkonstruktion hinreichend stabil an dem Grundmodul abgestützt ist.

Eine weitere Karosserie ist aus der EP 1 093 995 A2 bekannt, dessen Tragstruktur als Chassis aus stranggepressten Leichtbauplatten hergestellt ist. Das Chassis umfasst dabei ein Grundmodul mit seitlichen Längsträgern und mit einem aus Leichtbauplatten gebildeten Karosserieboden, der gegenüber den seitlichen Längsträgern zurückspringend angeordnet ist. Dieses Grundmodul ist mit einem vorderen Modul zu verbinden, welches eine vordere Stirnwand und einen schräg verlaufenden Pedalboden umfasst. Darüber hinaus umfasst dieses vordere Modul zwei Leichtbauplatten, welche bei zusammengesetztem Chassis den vorderen Endbereich des Karosseriebodens bilden. Die beiden Leichtbauplatten erstrecken sich dabei über einen erheblichen Längenbereich des Grundmoduls nach hinten.

Weiter ist aus der EP 0 622 289 A1 eine Karosserie als bekannt zu entnehmen, welche ein aus Strangpressprofilen zusammengesetztes Grundmodul umfasst. Dieses Grundmodul hat einen sich zwischen seitlichen Längsträgern erstreckenden Karosserieboden, welcher gegenüber den seitlichen Längsträgern bzw. gegenüber Seitenwänden des Grundmoduls zurückspringend angeordnet ist. Das Grundmodul ist mit einem Vorbaumodul zu verbinden, welches einen sich ausgehend von einer vorderen Stirnwand nach hinten erstreckenden Endbereich des Karosseriebodens umfasst. Die Stirnwand selbst ist dabei mit den Seitenwänden des Grundmoduls zu verbinden.

Aus der FR 2 618 746 A ist eine Karosserie als bekannt zu entnehmen, an deren Grundmodul ein Vorbaumodul zu befestigen ist. Hierzu werden zwei nahe der Fahrzeugmitte in Fahrzeuglängsringung verlaufende Längsträger des Vorbaumoduls in zugehörige Aufnahmen am Unterboden des Grundmoduls eingeschoben.

Schließlich ist aus der DE 198 33 395 A1 eine Karosserie bekannt, deren Tragstruktur aus im Wesentlichen vier großformatigen Teilmodulen zusammengesetzt ist. Eines der Teilmodule ist als seitlich bis an Vorderwandsäulen heranreichendes Grundmodul mit seitlichen Längsträgern sowie einem Karosserieboden ausgebildet. Bei zusammengesetzter Tragstruktur ist das Grundmodul mit einem als Vorbaumodul gestalteten Teilmodul verbunden, welches zur vorderen Knautschzone des Kraftwagens gehört und crashstabil am Grundmodul abgestützt ist. Durch die Ergänzung des Grundmoduls und des Vorbaumoduls mit einem Dachmodul, oder durch am vorderen Ende des Grundmoduls vorgesehene Dachabschnitte entsteht eine stabile Anbindung des Vorbaumoduls am Grundmodul.

Der Erfindung liegt die Aufgabe zugrunde, eine Karosserie für einen Kraftwagen zu schaffen, bei der das Vorbaumodul bereits ohne Dachkonstruktion auf stabilere Weise am Grundmodul festgelegt ist.

Die erfindungsgemäße Lösung dieser Aufgabe ergibt sich aus den Merkmalen des Hauptanspruchs. Vorteilhafte Ausgestaltungen der Erfindung sind den übrigen Ansprüchen zu entnehmen.

Bei der Tragstruktur der erfindungsgemäßen Karosserie sind an den vorderen Enden der seitlichen Längsträgerabschnitte des Grundmoduls nach oben abragende Säulenabschnitte angeordnet, welche mit an den seitlichen Längsträgerabschnitten des Vorbaumoduls nach oben abragenden Säulenabschnitten des Vorbaumoduls verbindbar sind. Hierdurch können die Längsträgerabschnitte des Vorbaumoduls und das Grundmoduls - über die zugehörigen Säulenabschnitte - auch in Höhenrichtung miteinander verbunden werden und es ergibt sich insgesamt eine stabile winklige Befestigung der Längsträger- und Säulenabschnitte des Vorbaumoduls und des Grundmoduls. Durch die sehr stabile Befestigung des Vorbaumoduls an dem Grundmodul ist die Tragstruktur für Fahrzeuge mit unterschiedlichem Aufbau verwendbar, da das Vorbaumodul bereits ohne Dachkonstruktion hinreichend stabil am Grundmodul befestigt ist. Hierdurch ergibt sich auch eine besonders gute Eignung der Tragstruktur für offene Kraftwagen. Dabei erstrecken sich die nach oben abragenden Säulenabschnitte bevorzugt etwa rechtwinklig zu der Erstreckungsrichtung der Längsträger.

Die einander zugeordneten, nach oben abragenden Säulenabschnitte des Vorbaumoduls und des Grundmoduls können beispielsweise über jeweils aneinander angepasste Fügeflächen miteinander zu vorderen Türsäulen verbunden werden, so dass sich einerseits eine besonders gute Anbindung des Vorbaumoduls an dem Grundmodul ergibt und andererseits steife und stabile Türsäulen - vorzugsweise bis auf Höhe der Bordwandkante der Tragstruktur - geschaffen sind. Zwischen den Türsäulen erstreckt sich bevorzugt eine vordere Stirnwand, welche die Türsäulen in Fahrzeugquerrichtung aussteift.

Die Verbindung zwischen Vorbaumodul und Grundmodul ist dabei besonders stabil, wenn die einander zugeordneten seitlichen Längsträgerabschnitte des Vorbaumoduls und des Grundmoduls über Fügeflächen miteinander verbunden sind, welche sich über die zumindest annähernd gesamte Überdeckungslänge der einander zugeordneten Längsträgerabschnitte bzw. der beiden Module erstrecken.

Zur Stabilität der Anbindung des Vorbaumoduls am Grundmodul trägt weiter bei, dass die seitlichen Längsträgerabschnitte des Vorbaumoduls und des Grundmoduls jeweils ein im Querschnitt geschlossenes Kastenprofil aufweisen. Nach dem Zusammenfügen der einander jeweils zugeordneten Längsträgerabschnitte sind somit seitliche Längsträger mit im Querschnitt doppeltem Kastenprofil geschaffen, welche besonders steif sind.

Die nach oben abragenden Säulenabschnitte des Vorbaumoduls und des Grundmoduls umfassen bevorzugt jeweils ein im Querschnitt geschlossenes Kastenprofil, so dass nach dem Zusammenfügen der einander jeweils seitlich zugeordneten Säulenabschnitte besonders steife Türsäulen mit im Querschnitt doppeltem Kastenprofil geschaffen sind.

Nach dem Zusammenbau der großformatigen Teilmodule ist die Tragstruktur mit Außenbeplankungsteilen zu verkleiden, welche die Fügestellen der Teilmodule mit den Außenbeplankungsteilen kaschieren. Hierdurch ist gewährleistet, dass die Teilmodule einerseits mit hinreichenden Toleranzen fertigungstechnisch einfach und somit kostengünstig gefügt werden können und andererseits eine Abdeckung der Fügestellen mit einem hochwertigen Qualitätseindruck entsteht.

Weitere Vorteile, Merkmale und Einzelheiten der Erfindung ergeben sich aus der nachfolgenden Beschreibung eines bevorzugten Ausführungsbeispieles sowie anhand der Zeichnungen; diese zeigen in
- Fig.1: eine perspektivische Explosionsdarstellung auf die aus großformatigen Teilmodulen zusammengesetzte Tragstruktur der erfindungsgemäßen Kraftwagenkarosserie;
- Fig.2: eine weitere perspektivische Explosionsdarstellung auf die aus Teilmodulen zusammengesetzte Tragstruktur, welche mit Außenbeplankungsteilen verkleidet ist;
- Fig.3: eine Perspektivansicht auf ein als Vorbaumodul ausgebildetes Teilmodul der Tragstruktur;
- Fig.4: eine Perspektivansicht auf ein als Grundmodul ausgebildetes Teilmodul der Tragstruktur;
- Fig.5a,b: jeweils ausschnittsweise Perspektivansichten auf das Grundmodul und das Vorbaumodul vor dem Zusammenfügen;
- Fig.6: eine Perspektivansicht auf das Grundmodul und das Vorbaumodul nach dem Zusammenfügen;
- Fig.7: eine Perspektivansicht auf ein als Heckmodul ausgebildetes Teilmodul der Tragstruktur;

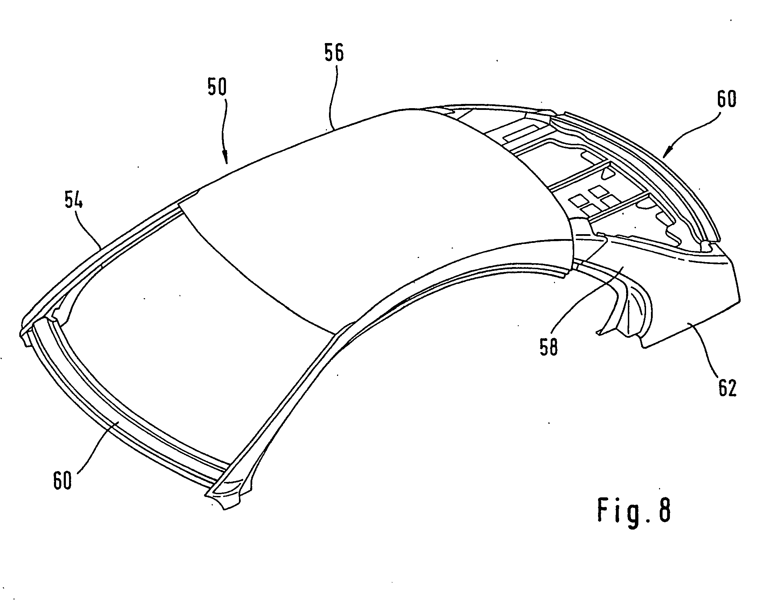

- Fig.8: eine Perspektivansicht auf ein als Dachmodul ausgebildetes Teilmodul der Tragstruktur; und in
- Fig.9: eine ausschnittsweise Perspektivansicht auf die zusammengesetzte Tragstruktur, welche jeweils ein linkes und rechtes Seitenwandmodul umfasst.

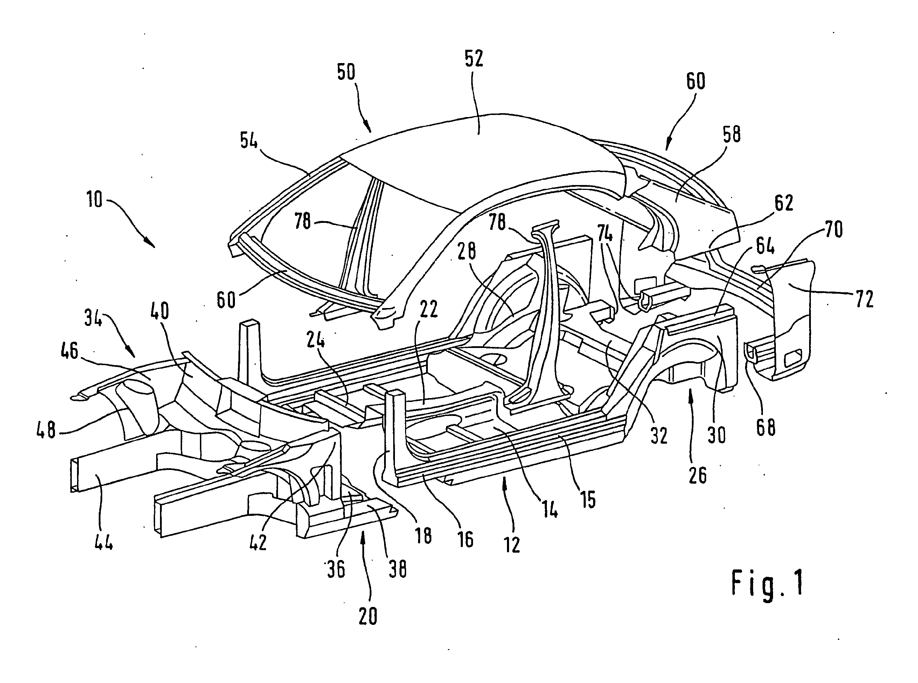

In Fig.1 ist in einer perspektivischen Explosionsdarstellung eine Tragstruktur 10 einer Kraftwagenkarosserie gezeigt, die aus mehreren großformatigen, im weiteren noch näher beschriebenen Teilmodulen zusammengesetzt ist. Die Teilmodule der Tragstruktur 10 sind in dem hier gezeigten Ausführungsbeispiel jeweils aus einer Mehrzahl von zusammengefügten Blechteilen hergestellt; gleichfalls können die Teilmodule jedoch auch in anderen Bauweisen, beispielsweise als sog. Spaceframe, als Kunststoffteile, Metallgussteile, als Bauteile in sog. Sandwich-Bauweise oder dgl. vorgefertigt sein. Insbesondere sind dabei auch Kombinationen unterschiedlicher Bauweisen für die zusammengefügten Teilmodule je nach Anwendung und Belastung denkbar. Die einzelnen Module sind insbesondere über Klebverbindungen, Schweißverbindungen oder dgl. zusammengefügt. Gleichfalls sind andere gängig Verbindungen wie Schraubverbindungen oder dgl. denkbar.

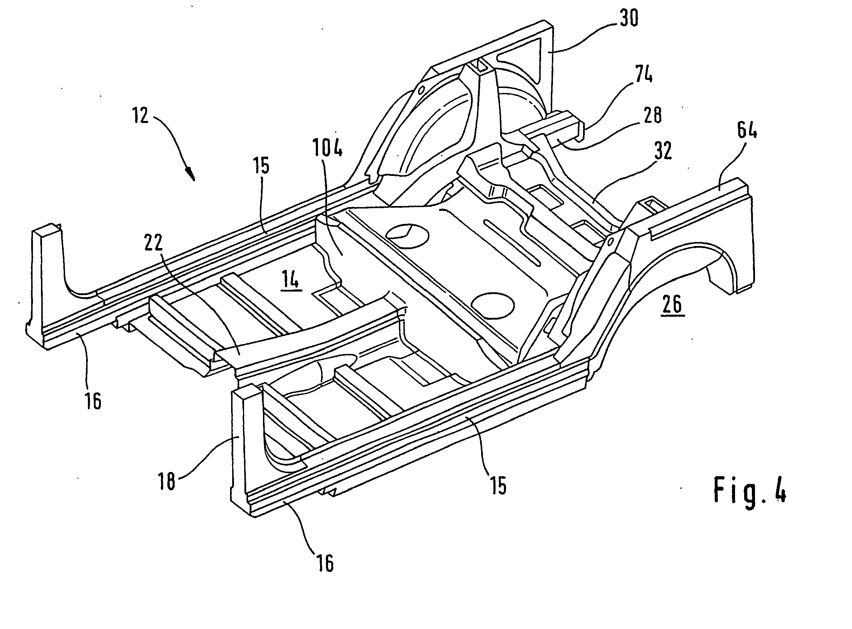

Ein in Zusammenschau von Fig.1 mit Fig.4 erkennbares Grundmodul 12 der Tragstruktur 10 umfasst im wesentlichen einen Karosserieboden 14, der seitlich von Längsträgern 15 begrenzt ist. Nach vorne reicht das Grundmodul 12 mit Längsträgerabschnitten 16 bis an Säulenabschnitte 18 von Vorderwandsäulen 20, welche von den jeweils zugeordneten vorderen Enden der seitlichen Längsträgerabschnitte 16 nach oben abragen. Der Karosserieboden 14 des Grundmoduls 12 endet in einem erheblichen Abstand hinter dem vorderen Ende des Grundmoduls 12 bzw. hinter den Säulenabschnitten 18 der Vorderwandsäulen 20. Dabei ist der Karosserieboden 14 hier mit einem Mitteltunnel 22 sowie mit von diesem sich nach außen erstreckenden Querträgern 24 versehen, welche mit den Längsträgern 15 fest verbunden sind. Hinten endet das Grundmodul 12 hinter hinteren Radhäusern 26, an deren Innenseite sich Verlängerungen 28 der seitlichen Längsträger 15 erstrecken. Oberhalb der hinteren Radhäuser 26 sind Wandbereiche 30 der jeweiligen hinteren Seitenwand angeordnet. Der Karosserieboden 14 endet hinten an einem Querträger 32, welcher sich zwischen den Verlängerungen 28 der seitlichen Längsträger 15 auf Höhe der hinteren Radhäusern 26 in Fahrzeugquerrichtung erstreckt. Das Grundmodul 12 wird bereits vor dem Zusammenfügen mit den anderen Teilmodulen so weit als möglich ausgestattet. So sind beispielsweise die Innenverkleidung, eventuell die Sitzanlage, die elektrische und elektronische Einrichtung, oder die Unterfluranlage z.B. mit Teilen der Auspuffanlage bereits an dem Grundmodul angebracht und ggf. mit Adaptern, Steckverbindungen oder dgl. versehen, die eine Verbindung mit weiteren Bauteilen ermöglichen.

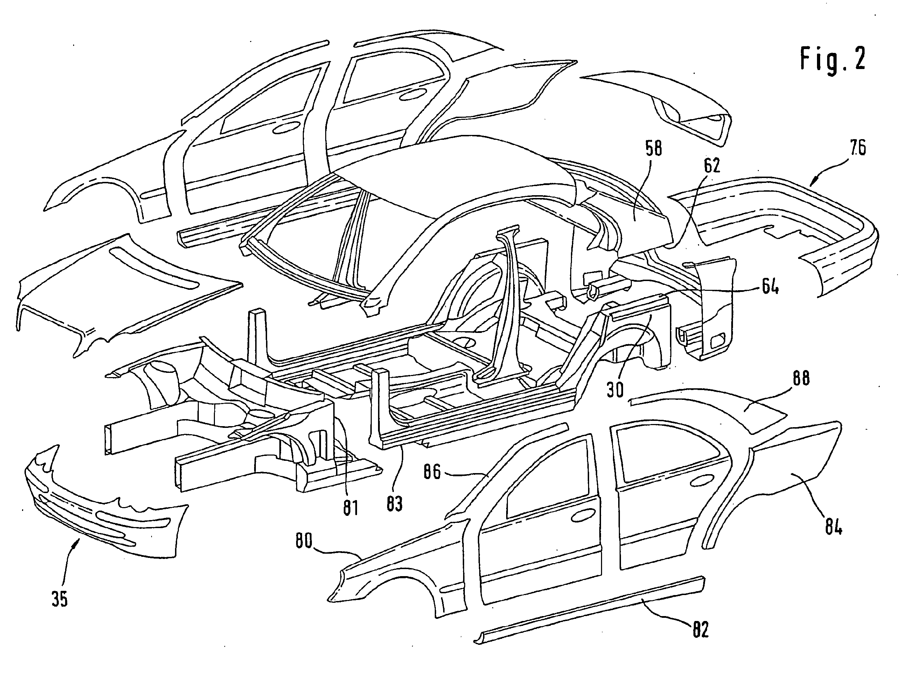

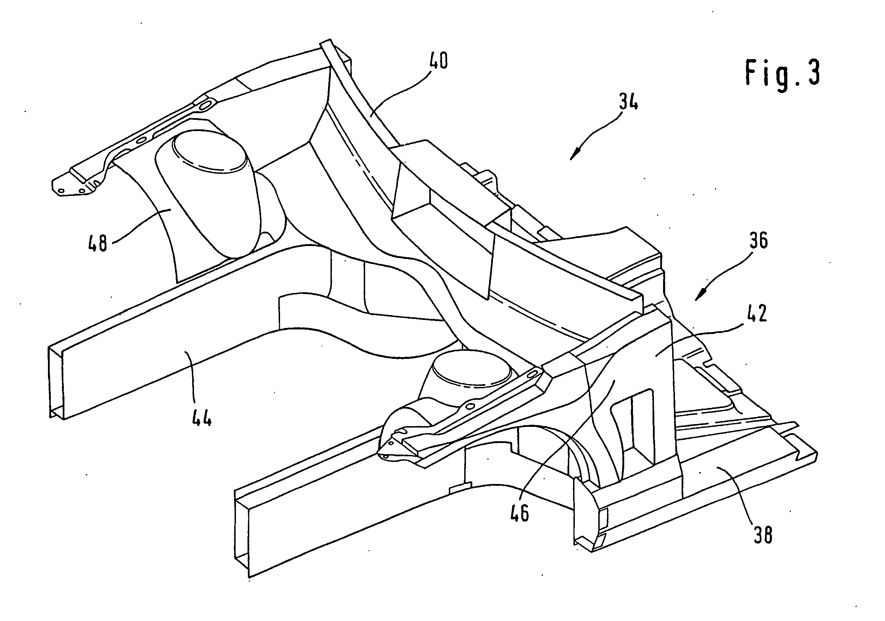

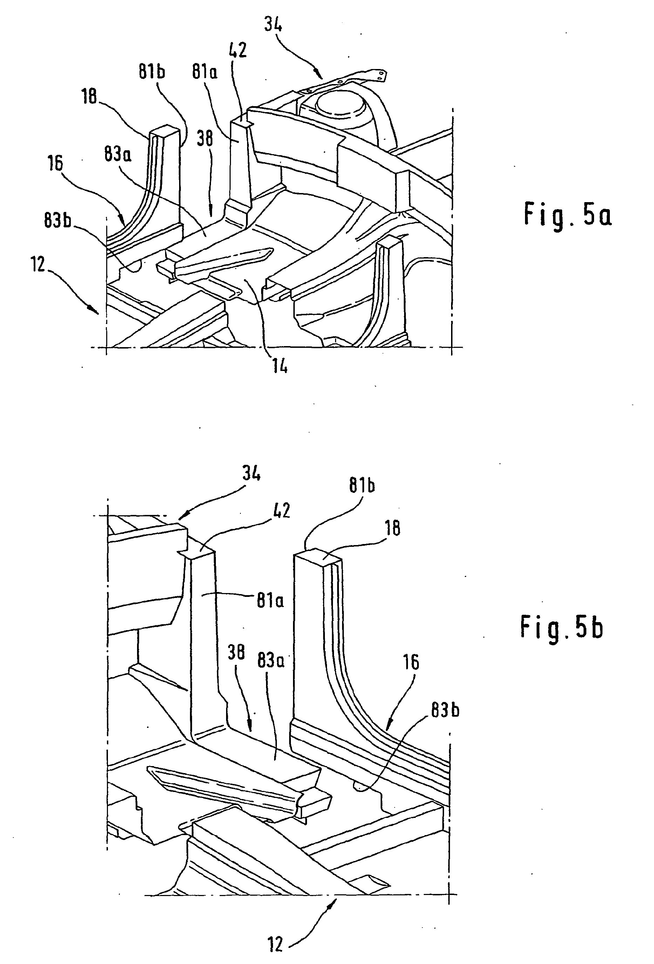

Mit dem Grundmodul 12 ist ein in Zusammenschau mit Fig.3 erkennbares Vorbaumodul 34 verbunden, welches zur vorderen Knautschzone des Kraftwagens gehört und crashstabil am Grundmodul 12 abgestützt ist. Hierzu umfasst das Vorbaumodul 34 einen vorderen Endbereich 36 des Karosseriebodens 14, welcher sich zwischen seitlichen Längsträgerabschnitten 38 des Vorbaumoduls 34 erstreckt. Wie in Zusammenschau mit den Figuren 3, 5a und 5b erkennbar, enden der vordere Endbereich 36 des Karosseriebodens 14 und die seitlichen Längsträgerabschnitte 38 nach hinten zumindest annähernd auf einer Höhe. Nach vorne endet der vordere Endbereich 36 des Karosseriebodens 14 an einer vorderen Stirnwand 40 der Fahrgastzelle, welche sich vom vorderen Endbereich 36 des Karosseriebodens 14 bis etwa auf Höhe der Bordwandkante der Tragstruktur 10 erstreckt. Seitlich wird die Stirnwand 40 von Säulenabschnitten 42 der Vorderwandsäulen 20 begrenzt, welche von den seitlichen Längsträgerabschnitten 38 des Vorbaumoduls 34 nach oben abragen. Am vorderen Ende des Vorbaumoduls 34 sind vordere Längsträger 44 sowie vordere Seitenwandbereiche 46 erkennbar, zwischen denen Teile 48 der Radhausverkleidung der vorderen Radhäuser angeordnet sind. Nach vorne schließt sich an das Vorbaumodul 34 ein Frontmodul 35 an, welches in Fig.2 teilweise dargestellt ist. Dieses Frontmodul 35 umfasst beispielsweise den vorderen Stoßfänger, den Bugbereich des Kraftwagens, die Scheinwerfer, Teile des Kühlers sowie Teile der Radhausverkleidung. Wie das Grundmodul 12 wird auch das Vorbaumodul 34 bereits vor dem Zusammenfügen mit den anderen Teilmodulen so weit als möglich ausgestattet. So können insbesondere nicht gezeigte Bauteile und Aggregate wie die Instrumententafel, die Klimaanlage, die Pedalanlage usw. bereits am Vorbaumodul angebracht sein.

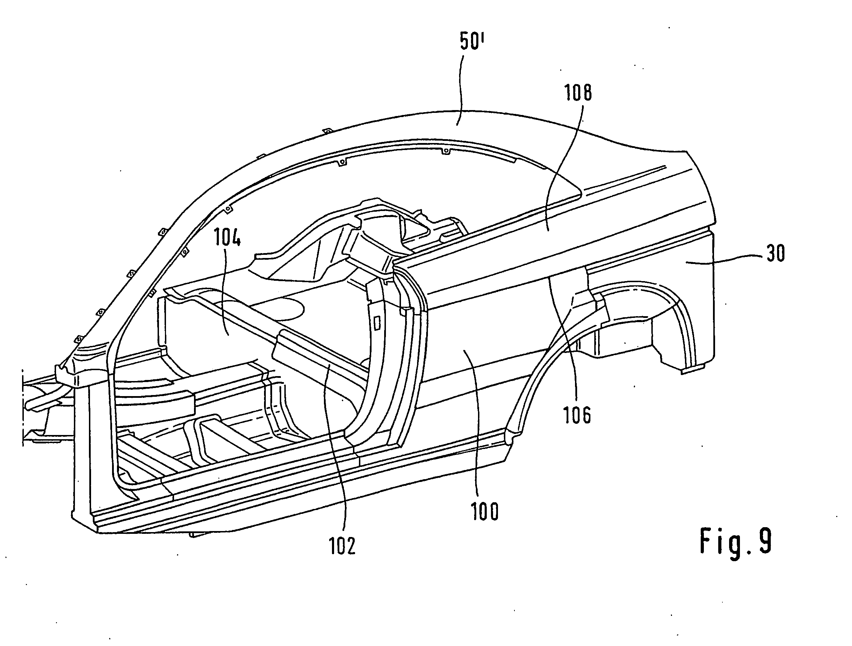

Auf das Grundmodul 12 und das Vorbaumodul 34 ist ein in Zusammenschau mit Fig.9 erkennbares Dachmodul 50 aufsetzbar, welches hier seitliche A-Säulen 54, im Bereich des Dachs 52 seitliche Dachsäulen 56, und C-Säulen 58 umfasst. Die unteren Enden der A-Säulen 54 bzw. der C-Säulen 58 sind über jeweils ein Querträgerelement 60 miteinander verbunden. Die A-Säulen 54 stützen sich bei zusammengesetzter Tragstruktur 10 sowohl an dem Grundmodul 12 als auch am Vorbaumodul 34 ab. Mit anderen Worten sind die A-Säulen 54 mit ihren unteren Enden sowohl an den nach oben ragenden Säulenabschnitten 18 und 42 des Grundmoduls 12 und des Vorbaumoduls 34, welche die jeweilige Vorderwandsäule 20 bilden, abgestützt. Hinten sind Fügeflächen 62 der unteren Enden der C-Säulen 58 mit Fügeflächen 64 am jeweils zugeordneten oberen Ende der Wandbereiche 30 beispielsweise mittels einer Klebeverbindung befestigt.

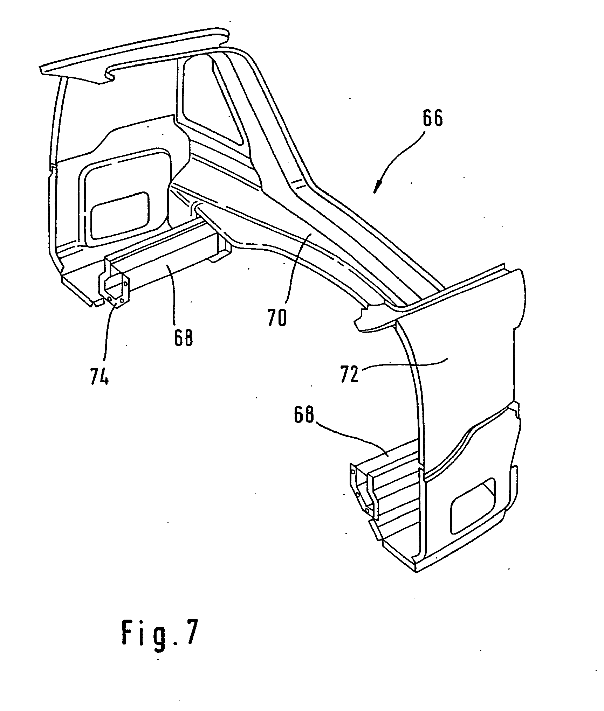

Hinten schließt sich an das Grundmodul 12 ein unter Zusammenschau mit Fig.7 erkennbares Heckmodul 66 an, welches bei zusammengesetzter Tragstruktur 10 zusammen mit dem hinteren Endbereich des Grundmoduls 12 zur hinteren Knautschzone des Kraftwagens gehört und im wesentlichen seitliche hintere Längsträgerabschnitte 68, einen die Längsträgerabschnitte 68 verbindenden hinteren Querträger 70 sowie hintere Seitenwandbereiche 72 umfasst. Durch den Querträger 32 und die Längsträgerverlängerungen 28 des Grundmoduls 12 sowie durch die Längsträgerabschnitte 68 und den hinteren Querträger 70 des Heckmoduls 66 ist bei zusammengesetzter Tragstruktur ein Tragrahmen gebildet, innerhalb dem eine nicht gezeigte Reserveradmulde anbringbar ist. Es ist ersichtlich, dass das Heckmodul 66 entlang einer vertikal verlaufenden Fahrzeugquerebene mit dem Grundmodul 12 und dem Dachmodul 50 verbunden ist. Die Befestigung des Heckmoduls 66 an dem Grundmodul 12 und dem Dachmodul 50 erfolgt über Flansche 74 an den Längsträgerverlängerungen 28 bzw. den zugeordneten Längsträgerabschnitten 68, sowie über weitere nicht gezeigte Fügestellen zwischen den Modulen 12,50 und 66. Nach hinten schließt sich an das Heckmodul 66 ein Heckendmodul 76 an, welches in Fig.2 teilweise erkennbar ist. Dieses Heckendmodul 76 umfasst beispielsweise den hinteren Stoßfänger oder die rückwärtige Beleuchtung des Kraftwagens. Es ist als selbstverständlich anzusehen, dass sowohl das Dachmodul 50 wie auch das Heckmodul 66 bereits vor dem Zusammenfügen der Tragstruktur 10 so weit als möglich mit Verkleidungen, Aggregaten und Bauteilen ausgestattet sein können.

Bei dem hier gezeigten fünftürigen Kraftwagen ist zwischen der seitlichen Dachsäule 56 des Dachmoduls 50 und dem seitlichen Längsträger 15 des Grundmoduls 12 eine jeweils zugeordnete B-Säule 78 befestigt.

In Fig.2 ist in einer weiteren perspektivischen Explosionsdarstellung die aus den Teilmodulen 12,34,50 und 66 zusammengesetzte Tragstruktur 10 dargestellt, welche mit Außenbeplankungsteilen aus Kunststoff, Blech oder dgl. verkleidet ist. So sind insbesondere vordere Kotflügelverkleidungen 80 so ausgebildet, dass die Fügestelle 81 zwischen den nach oben ragenden Säulenabschnitten 18 und 42 des Grundmoduls 12 und des Vorbaumoduls 34 abgedeckt und von außen nicht sichtbar ist. Außerdem sind durch die vordere Kotflügelverkleidungen 80 auch die Befestigungsstellen der A-Säulen 54 des Dachmoduls 50 an dem Grundmodul 12 und dem Vorbaumodul 34 ebenfalls überdeckt und nicht sichtbar. Seitliche Schwellerverkleidungen 82 sind so ausgebildet, dass die Fügestelle 83 zwischen den jeweiligen Längsträgerabschnitten 16 des Grundmoduls 12 und den Längsträgerabschnitten 38 des Vorbaumoduls 34 von außen nicht sichtbar kaschiert ist. Hintere Kotflügelverkleidungen 84 sind ebenfalls so ausgebildet, dass die Fügestelle 62,64 zwischen der C-Säule 58 und dem hinteren Wandbereich 30 ebenfalls von außen nicht erkennbar kaschiert ist. Es ist ersichtlich, dass somit alle Fügestellen der großformatigen Teilmodule 12,34,50 und 66 mit den Verkleidungsteilen 80,82,84 überdeckt und von außen nicht sichtbar sind. Hierdurch ist gewährleistet, dass die Teilmodule mit hinreichenden- Toleranzen fertigungstechnisch einfach und somit kostengünstig gefügt werden können und andererseits durch die Abdeckung der Fügestellen ein hochwertiger Qualitätseindruck vermittelt wird.

Die A-Säulen 54, die seitlichen Dachsäulen 56 und die C-Säulen 58 sind mit Säulenverkleidungsteilen 86,88 verkleidet.

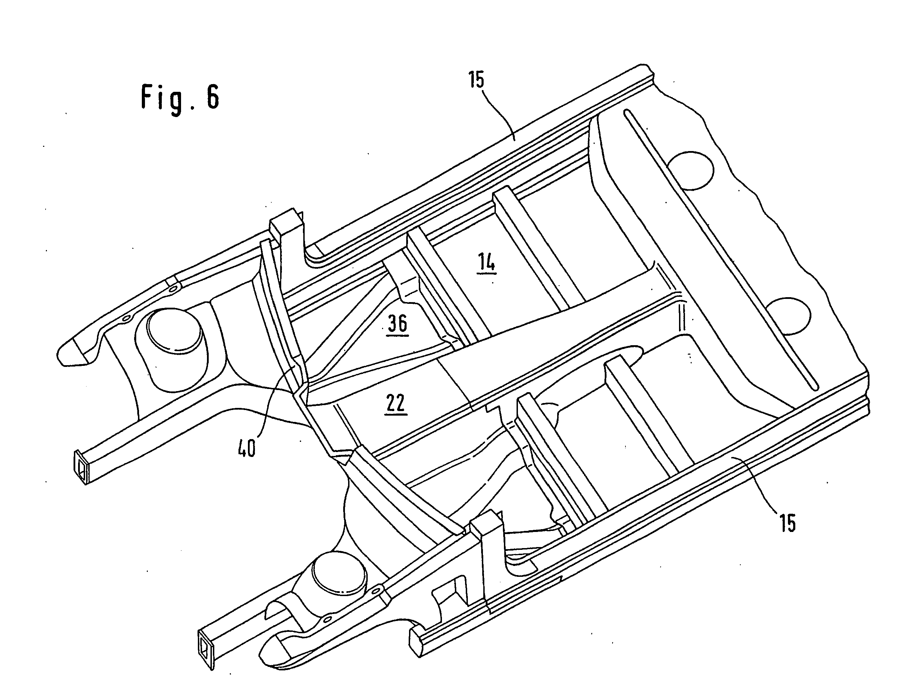

In den Figuren 5a und 5b ist in ausschnittsweiser Perspektivansichten das Zusammenfügen des Grundmoduls 12 und des Vorbaumoduls 34, und in Fig.6 ist in Perspektivansicht das Grundmodul 12 und das Vorbaumodul 34 nach dem Zusammenfügen dargestellt. Es ist erkennbar, dass sich der zum Vorbaumodul 34 gehörende vordere Endbereich 36 des Karosseriebodens 14 zwischen den seitlichen Längsträgerabschnitten 16 über einen erheblichen Längenbereich des Grundmoduls 12 nach hinten erstreckt. Weiter ist erkennbar, dass die einander zugeordneten seitlichen Längsträgerabschnitte 16,38 des Vorbaumoduls 34 und des Grundmoduls 12 aneinander angepasste Fügeflächen 83a,b an der jeweiligen Fügestelle 83 (Fig.2) aufweisen, welche sich über die zumindest annähernd gesamte Überdeckungslänge der einander zugeordneten Längsträgerabschnitte 16,38 erstrecken. Dabei entspricht die Länge der Fügeflächen 83a,b etwa der Länge des angrenzenden vorderen Endbereichs 36 des Karosseriebodens 14. Die seitlichen Längsträgerabschnitte 16,38 des Vorbaumoduls 34 und des Grundmoduls 12 haben jeweils ein im Querschnitt geschlossenes Kastenprofil, so dass nach dem Zusammenfügen der einander jeweils zugeordneten Längsträgerabschnitte 16,38 seitliche Längsträger mit im Querschnitt doppeltem, etwa 8-förmigen Kastenprofil entstehen. Das Kastenprofil der seitlichen Längsträgeräbschnitte 16,38 des Vorbaumoduls 34 und des Grundmoduls 12 hat jeweils einen über seine Länge veränderlichen, hier gestuften Querschnitt. Natürlich wäre es in diesem Zusammenhang auch denkbar, dass die Längsträgerabschnitte 16,38 jeweils als Teilschale ausgebildet sind, welche dann zu einem Träger miteinander verbunden werden.

Die nach oben abragenden Säulenabschnitte 18,42 des Grundmoduls 12 und des Vorbaumoduls 34 umfassen jeweils aneinander angepasste Fügeflächen 81a,b an der jeweiligen Fügestelle 81 (Fig.2), über welche die Säulenabschnitte 18,42 zu der Vorderwandsäule 20 verbunden sind. Die nach oben abragenden Säulenabschnitte 18,42 umfassen jeweils ein im Querschnitt geschlossenes Kastenprofil, so dass nach dem Zusammenfügen der jeweils zugeordneten Säulenabschnitte 18,42 besonders steife Türsäulen 20 mit im Querschnitt doppeltem, etwa 8-förmigen Kastenprofil geschaffen sind. Die Fügeflächen 81a,b der Säulenabschnitte 18,42 und die Fügeflächen 83a,b der Längsträgerabschnitte 16,38 verlaufen hier zumindest annähernd rechtwinklig zueinander. Durch den winkeligen Verbund der Säulenabschnitte 18 mit den Längsträgerabschnitten 16 des Grundmoduls 12 bzw. den winkeligen Verbund der Säulenabschnitte 42 mit den Längsträgerabschnitten 38 des Vorbaumoduls 34 wird eine besonders steife Abstützung des Vorbaumoduls 34 am Grundmodul 12 geschaffen. Die Lage des Grundmoduls 12 und des Vorbaumoduls 34 wird also in Fahrzeuglängs- und in Fahrzeughochrichtung durch die Fügeflächen 83a,b und 81a,b bestimmt. In Fahrzeugquerrichtung wird die Lage des Grundmoduls 12 und des Vorbaumoduls 34 nicht durch die Fügeflächen 83a,b und 81a,b bestimmt, sondern beispielsweise durch Anlageflächen des Grundmoduls 12 und des Vorbaumoduls 34 im Bereich des Mitteltunnels 22. Der zum Vorbaumodul gehörende vordere Endbereich 36 des Karosseriebodens 14 ist mit dem zum Grundmodul 12 gehörenden Bereich des Karosseriebodens 14 überlappend verbunden, wie insbesondere aus Fig.6 ersichtlich. Der Mitteltunnel 22 ist dabei sowohl in den vorderen Endbereich 36 wie auch in den Karosserieboden 14 eingeformt und mit Fügeflächen versehen.

Schließlich ist in Fig.9 in ausschnittsweiser Perspektivansicht die zusammengesetzte Tragstruktur 10 gezeigt, welche jeweils ein linkes und rechtes, sich von hinter den vorderen Seitentüren bis zu hinteren Türsäulen erstreckendes Seitenwandmodul 100 umfasst. Das Seitenwandmodul 100 ist oberhalb des zugeordneten Längsträgers 15 und gegenüber der hinteren Seitenwand 30 am Grundmodul 12 befestigt. Außerdem ist das Seitenwandmodul 100 in Fahrzeugquerrichtung mit einer Stützanordnung 102 gegenüber einem Querträger 104 abgestützt.

Das Grundmodul 12 und dem Seitenwandmodul 100 schließen auf Höhe einer gemeinsamen Fügefläche 106 ab, auf der ein hier andersartiges Coupé-Dachmodul 50' mit einem Seitenwandbereich 108 befestigt ist.

## Patentansprüche

1. Karosserie für einen Kraftwagen, deren Tragstruktur (10) aus großformatigen Teilmodulen (12,34,50,66) zusammengesetzt ist, wobei ein Grundmodul (12) seitliche Längsträger (15) sowie einen Karosserieboden (14) umfasst und seitlich bis an Vorderwandsäulen (20) heranreicht, wobei das Grundmodul (12) bei zusammengesetzter Tragstruktur (10) mit einem Vorbaumodul (34) verbunden ist, welches zur vorderen Knautschzone des Kraftwagens gehört und crashstabil am Grundmodul (12) abgestützt ist, wobei ein vorderer Endbereich (36) des Karosseriebodens (14) zum Vorbaumodul (34) gehört und sich zwischen seitlichen Längsträgerabschnitten (16) über einen erheblichen Längenbereich des Grundmoduls (12) nach hinten erstreckt, und wobei das Vorbaumodul (34) den vorderen Endbereich (36) des Karosseriebodens (14) seitlich begrenzende Längsträgerabschnitte (38) umfasst, welche mit den seitlichen Längsträgerabschnitten (16) des Grundmoduls (12) verbindbar sind,
**dadurch gekennzeichnet,**
**dass** an den vorderen Enden der seitlichen Längsträgerabschnitte (16) des Grundmoduls (12) nach oben abragende Säulenabschnitte (18) angeordnet sind, welche mit an den seitlichen Längsträgerabschnitten (38) des Vorbaumoduls (34) nach oben abragenden Säulenabschnitten (42) des Vorbaumoduls (34) verbindbar sind.

2. Karosserie nach Anspruch 1,
**dadurch gekennzeichnet,**
**dass** die einander zugeordneten seitlichen Längsträgerabschnitte (16,38) des Vorbaumoduls (34) und des Grundmoduls (12) aneinander angepasste Fügeflächen (83a,b) aufweisen, welche sich über die zumindest annähernd gesamte Überdeckungslänge der einander zugeordneten Längsträgerabschnitte (16,38) erstrecken.

3. Karosserie nach Anspruch 2,
**dadurch gekennzeichnet,**
**dass** die Länge der Fügeflächen (83a,b) etwa der Länge des angrenzenden vorderen Endbereichs (36) des Karosseriebodens (14) entspricht.

4. Karosserie nach Anspruch 1,
**dadurch gekennzeichnet,**
**dass** die seitlichen Längsträgerabschnitte (38) des Vorbaumoduls (34) und der vordere Endbereich (36) des Karosseriebodens (14) sich etwa gleich weit in Richtung nach hinten erstrecken.

5. Karosserie nach Anspruch 1,
**dadurch gekennzeichnet,**
**dass** die seitlichen Längsträgerabschnitte (16,38) des Vorbaumoduls (34) und des Grundmoduls (12) jeweils ein im Querschnitt geschlossenes Kastenprofil aufweisen.

6. Karosserie nach Anspruch 5,
**dadurch gekennzeichnet,**
**dass** das Kastenprofil der seitlichen Längsträgerabschnitte (16,38) des Vorbaumoduls (34) und des Grundmoduls (12) jeweils einen über seine Länge veränderlichen Querschnitt aufweist.

7. Karosserie nach Anspruch 1,
**dadurch gekennzeichnet,**
**dass** zwischen den nach oben abragenden Säulenabschnitten (42) des Vorbaumoduls (34) eine vordere Stirnwand (40) befestigt ist.

8. Karosserie nach Anspruch 1,
**dadurch gekennzeichnet,**
**dass** die nach oben abragenden Säulenabschnitte (18,42) des Vorbaumoduls (34) und des Grundmoduls (12) über jeweils aneinander angepasste Fügeflächen (81a,b) miteinander zu den Vorderwandsäulen (20) verbindbar sind.

9. Karosserie nach Anspruch 1,
**dadurch gekennzeichnet,**
**dass** die nach oben abragenden Säulenabschnitte (18,42) des Vorbaumoduls (34) und des Grundmoduls (12) jeweils ein im Querschnitt geschlossenes Kastenprofil aufweisen und sich bis etwa auf Höhe der Bordwandkante der Tragstruktur (10) erstrecken.

10. Karosserie nach Anspruch 1,
**dadurch gekennzeichnet,**
**dass** der zum Vorbaumodul (34) gehörende vordere Endbereich (36) des Karosseriebodens (14) mit dem zum Grundmodul (12) gehörenden Bereich des Karosseriebodens (14) überlappend verbunden ist.

11. Karosserie nach Anspruch 1,
**dadurch gekennzeichnet,**
**dass** das Grundmodul (12) hinter hinteren Radhäusern (26) endet und mit einem Heckmodul (66) verbindbar ist, welches bei zusammengesetzter Tragstruktur (10) zusammen mit dem hinteren Endbereich des Grundmoduls (12) zur hinteren Knautschzone des Kraftwagens gehört.

12. Karosserie nach Anspruch 1,
**dadurch gekennzeichnet,**
**dass** auf das Grundmodul (12) und das Vorbaumodul (34) ein Dachmodul (50) aufsetzbar ist, dessen vordere Dachsäulen (54) sich sowohl an dem Grundmodul (12) als auch am Vorbaumodul (34) abstützen.

13. Karosserie nach Anspruch 12,
**dadurch gekennzeichnet,**
**dass** das Dachmodul (50) einen unterhalb der Windschutzscheibe verlaufenden Querträger (60) umfasst, über den die Vorderwandsäulen (20) miteinander verbunden sind.

14. Karosserie nach Anspruch 12,
**dadurch gekennzeichnet,**
**dass** zwischen dem Dachmodul (50) und dem Grundmodul (12) eine B-Säule (78) befestigbar ist.

15. Karosserie nach Anspruch 1,
**dadurch gekennzeichnet,**
**dass** am Grundmodul (12) jeweils ein Seitenwandmodul (100) oberhalb des Längsträgers (15) befestigbar ist, welches sich von hinter den vorderen Seitentüren bis zu hinteren Türsäulen (58) erstreckt.

16. Karosserie nach Anspruch 1,
**dadurch gekennzeichnet,**
**dass** die Tragstruktur (10) mit Außenbeplankungsteilen (80,82,84) zu verkleiden ist, wobei die Fügestellen (62,64,81,83) der Teilmodule (12,34,50,66) mit den Außenbeplankungsteilen (80,82,84) kaschiert sind.

## Claims

1. Motor vehicle body, the support structure (10) of which is composed of large-size partial modules (12, 34, 50, 66), a basic module (12) comprising lateral longitudinal members (15) and a body floor (14) and reaching laterally as far as front wall columns (20), when the support structure (10) is assembled, the basic module (12) being connected to a front end module (34) which belongs to the front crumple zone of the motor vehicle and is supported in a crash stable manner on the basic module (12), a front end region (36) of body floor (14) belonging to the front end module (34) and extending rearward over a considerable length region of the basic module (12) between lateral longitudinal member sections (16), and the front end module (34) comprising longitudinal member sections (38) which laterally bound the front end region (36) of body floor (14) and can be connected to the lateral longitudinal member sections (16) of the basic module (12), **characterized in that** upwardly protruding column sections (18) which can be connected to upwardly protruding column sections (42) of the front end module (34) on the lateral longitudinal member sections (38) of the front end module (34) are arranged at the front ends of the lateral longitudinal member sections (16) of the basic module (12).

2. Body according to Claim 1, **characterized in that** the mutually assigned, lateral longitudinal member sections (16, 38) of the front end module (34) and of the basic module (12) have joining surfaces (83a, b) which are matched to each other and extend over the at least approximately entire overlapping length of the mutually assigned longitudinal member sections (16, 38).

3. Body according to Claim 2, **characterized in that** the length of the joining surfaces (83a, b) corresponds approximately to the length of the adjacent, front end region (36) of body floor (14) .

4. Body according to Claim 1, **characterized in that** the lateral longitudinal member sections (38) of the front end module (34) and the front end region (36) of body floor (14) extend rearward to approximately the same distance.

5. Body according to Claim 1, **characterized in that** the lateral longitudinal member sections (16, 38) of the front end module (34) and of the basic module (12) each have a box profile which is closed in cross section.

6. Body according to Claim 5, **characterized in that** the box profile of the lateral longitudinal member sections (16, 38) of the front end module (34) and of the basic module (12) in each case has a cross section which can be varied over its length.

7. Body according to Claim 1, **characterized in that** a front end wall (40) is fastened between the upwardly protruding column sections (42) of the front end module (34).

8. Body according to Claim 1, **characterized in that** the upwardly protruding column sections (18, 42) of the front end module (34) and of the basic module (12) can be connected to each other via joining surfaces (81a, b), which are matched in each case to each other, to form the front wall columns (20).

9. Body according to Claim 1, **characterized in that** the upwardly protruding column sections (18, 42) of the front end module (34) and of the basic module (12) each have a box profile which is closed in cross section, and extend to approximately level with the side wall edge of the support structure (10).

10. Body according to Claim 1, **characterized in that** the front end region (36) of the vehicle body (14), which region belongs to the front end module (34), is connected in an overlapping manner to that region of body floor (14) which belongs to the basic module (12).

11. Body according to Claim 1, **characterized in that** the basic module (12) ends behind rear wheel houses (26) and can be connected to a rear module (66) which, when the support structure (10) is assembled together with the rear end region of the basic module (12), belongs to the rear crumple zone of the motor vehicle.

12. Body according to Claim 1, **characterized in that** a roof module (50) can be placed onto the basic module (12) and the front end module (34), the front roof columns (54) of which roof module are supported both on the basic module (12) and on the front end module (34).

13. Body according to Claim 12, **characterized in that** the roof module (50) comprises a crossmember (60) which runs below the windscreen and via which the front wall columns (20) are connected to each other.

14. Body according to Claim 12, **characterized in that** a B-column (78) can be fastened between the roof module (50) and the basic module (12).

15. Body according to Claim 1, **characterized in that** a side wall module (100) can be fastened in each case to the basic module (12) above the longitudinal member (15) and extends from behind the front side doors as far as rear door columns (58).

16. Body according to Claim 1, **characterized in that** the support structure (10) is to be lined with outer panel parts (80, 82, 84), the joining points (62, 64, 81, 83) of the partial modules (12, 34, 50, 66) being covered by the outer panel parts (80, 82, 84).

## Revendications

1. Carrosserie pour un véhicule automobile, dont la structure portante (10) est constituée de modules partiels de grandes dimensions (12, 34, 50, 66), un module de base (12) comprenant des supports longitudinaux latéraux (15) ainsi qu'un sol de la carrosserie (14), et s'étendant latéralement jusqu'aux colonnes de la paroi avant (20), le module de base (12), lorsque la structure portante (10) est assemblée, étant connecté à un module de structure avant (34) qui appartient à la zone déformable avant du véhicule automobile et qui est supporté sur le module de base (12) de manière stable en cas de collision, une région d'extrémité avant (36) du sol de la carrosserie (14) appartenant au module de structure avant (34) et s'étendant vers l'arrière entre des portions latérales des supports longitudinaux (16) sur une région longitudinale considérable du module de base (12), et le module de structure avant (34) comprenant des portions de supports longitudinaux (38) délimitant latéralement la région d'extrémité avant (36) du sol de la carrosserie (14), lesquelles peuvent être connectées aux portions latérales des supports longitudinaux (16) du module de base (12),
**caractérisée en ce que**
des portions de colonne (18) saillant vers le haut sont prévues au niveau des extrémités avant des portions latérales des supports longitudinaux (16) du module de base (12) et peuvent être connectées à des portions de colonne (42) du module de structure avant (34), saillant vers le haut sur les portions latérales des supports longitudinaux (38) du module de structure avant (34).

2. Carrosserie selon la revendication 1,
**caractérisée en ce que**
les portions latérales des supports longitudinaux (16, 38) associées les unes aux autres, du module de structure avant (34) et du module de base (12), présentent des surfaces de joint (83a,b) adaptées les unes aux autres, qui s'étendent sur au moins approximativement toute la longueur de recouvrement des portions des supports longitudinaux (16, 38) associées les unes aux autres.

3. Carrosserie selon la revendication 2,
**caractérisée en ce que**
la longueur des surfaces de joint (83a,b) correspond approximativement à la longueur de la région d'extrémité avant adjacente (36) du sol de la carrosserie (14).

4. Carrosserie selon la revendication 1,
**caractérisée en ce que**
les portions latérales des supports longitudinaux (38) du module de structure avant (34) et de la région d'extrémité avant (36) du sol de la carrosserie (14) s'étendent vers l'arrière approximativement sur la même longueur.

5. Carrosserie selon la revendication 1,
**caractérisée en ce que**
les portions latérales des supports longitudinaux (16, 38) du module de structure avant (34) et du module de base (12) présentent à chaque fois un profil de caisse de section transversale fermée.

6. Carrosserie selon la revendication 5,
**caractérisée en ce que**
le profil de caisse des portions latérales des supports longitudinaux (16, 38) du module de structure avant (34) et du module de base (12) présente à chaque fois une section transversale variable sur sa longueur.

7. Carrosserie selon la revendication 1,
**caractérisée en ce**
**qu'**une paroi frontale (40) avant est fixée entre les portions de colonne (42) du module de structure avant (34) saillant vers le haut.

8. Carrosserie selon la revendication 1,
**caractérisée en ce que**
les portions de colonne (18, 42) saillant vers le haut, du module de structure avant (34) et du module de base (12), peuvent être connectées les unes aux autres pour former les colonnes de paroi avant (20), par le biais de surfaces de joint respectives (81a,b) adaptées les unes aux autres.

9. Carrosserie selon la revendication 1,
**caractérisée en ce que**
les portions de colonne (18, 42) saillant vers le haut, du module de structure avant (34) et du module de base (12), présentent à chaque fois un profil de caisse de section transversale fermée et s'étendent jusqu'à environ la hauteur de l'arête de la paroi de bord de la structure portante (10).

10. Carrosserie selon la revendication 1,
**caractérisée en ce que**
la région d'extrémité (36) du sol de la carrosserie (14) appartenant au module de structure avant (34) est connectée à la région du sol de la carrosserie (14) appartenant au module de base (12) avec un chevauchement.

11. Carrosserie selon la revendication 1,
**caractérisée en ce que**
le module de base (12) se termine derrière les passages de roue arrières (26) et peut être connecté à un module arrière (66) qui, lorsque la structure portante (10) est assemblée, appartient conjointement avec la région d'extrémité arrière du module de base (12) à la zone déformable arrière du véhicule automobile.

12. Carrosserie selon la revendication 1,
**caractérisée en ce que**
l'on peut poser sur le module de base (12) et le module de structure avant (34) un module de toit (50) dont les colonnes de toit avant (54) s'appuient à la fois sur le module de base (12) et sur le module de structure avant (34).

13. Carrosserie selon la revendication 12,
**caractérisée en ce que**
le module de toit (50) comprend un support transversal (60) s'étendant en dessous du pare-brise, qui relie entre elles les colonnes de la paroi avant (20).

14. Carrosserie selon la revendication 12,
**caractérisée en ce**
**qu'**une colonne B (78) peut être fixée entre le module de toit (50) et le module de base (12).

15. Carrosserie selon la revendication 1,
**caractérisée en ce**
**qu'**un module de paroi latérale (100) respectif peut être fixé sur le module de base (12) au-dessus du support longitudinal (15) et s'étend depuis l'arrière des portes latérales avant jusqu'aux colonnes de porte arrière (58).

16. Carrosserie selon la revendication 1,
**caractérisée en ce que**
la structure portante (10) peut être revêtue de pièces de revêtement extérieur (80, 82, 84), les zones de joint (62, 64, 81, 83) des modules partiels (12, 34, 50, 66) étant couvertes par les pièces de revêtement extérieur (80, 82, 84).
